# EUROPEAN PATENT APPLICATION

(11) **EP 1 505 841 A1**
(43) Date of publication of application: **09.02.2005**
(21) Application number: 04425588.3
(22) Date of filing: 30.07.2004
(51) Int. Cl.: H04Q 1/14

(54) **Termination strip for metal telephone cables arranged for the insertion of an access module**

(30) Priority: 04.08.2003 IT RM20030385
(71) Applicant: CIS Sud S.r.l., 00040 Ariccia Roma (IT)
(72) Inventor: Bernardini, Giuseppe, 00128 Roma (IT)
(74) Representative: Sarpi, Maurizio

(57) **Abstract**

A termination strip for telephone metal cables includes at least an elementary strip (1) provided with a further access point (A2) to the telephone wire pairs in addition to a first contact point (A1) already existing in the current strips.

Such additional access point is arranged at the rear side of the elementary strip so that a known access module (10) can be inserted both into the rear side and the front side where the first access point usually existing in the known strips is located.

## Description

The present invention relates to fixed telephony, and particularly an apparatus allowing the access to wire pairs already connected to telephone exchanges.

In recent times telephone operators have re-appraised functionally copper nets that are made of wire pairs.

This is due in particular to new systems capable of transmitting wide band signals on copper wire pairs after compression. Such technology has been recently developed and is known under the designation ADSL.

The request of a remote control and/or service system to measure automatically the transmission parameters of the wire pairs is a primary need.

The telephone wire pairs start together from the telephone exchange and/or the line distributor racks (on the road) and reach users individually, while other pairs are redundant and will be used for new connections.

In the telephone exchange and/or racks the pairs are terminated in groups to termination strips. In order to control effectively such pairs, it is then necessary that the measurement apparatus have direct access to the termination strip of the pairs.

The access to the termination strips is carried out by a system that provides essentially the use, in combination, of a remote control device, a local measurement apparatus, and at least an access module to the termination strip of the pairs.

The access module provides for the sectioning of the wire pairs at the "user side", "exchange side" and both sides directly.

The access module is inserted currently into a first access area provided at the front side of the termination strip because this is the only access area to the same that does not require the termination strip to be modified. It is then evident that upon manually servicing the termination strip, the access side is always the front side so that it is compulsory to remove the access module before service.

It should be noted, however, that the insertion of the access module is only possible when the termination strip is located in the exchange, and not when the same is located in a line distributor rack (on the road). In this case, in fact, the room at the front side of the termination strip is not enough to accommodate the access module permanently.

Furthermore, all of the service operations including the connections and/or the switching of the pairs take place at the front side.

The only available room in the line distributor rack is at the rear side of the termination strip where the access module can be inserted permanently and definitively without having to be removed in case of direct and/or manual servicing of the strip, as it is the case when the module is located in the exchange.

A first object of the invention is to provide the insertion of an access module to the rear side of the termination strip.

This has been accomplished according to the invention by providing a termination strip equipped with an additional input specifically dedicated to such module and arranged at its rear side.

A second object of the present invention is to provide a termination strip equipped with an additional input A2 for the access module without changing size and usual operation of the strip, which additional input A2 is added to input A1 present at the front side.

A better understanding of the invention will result from the following detailed description with reference to the accompanying drawings that show a preferred embodiment thereof only by way of a not limiting example.

In the drawings:
Figure 1 is a perspective view of the termination strip according to the invention arranged for the insertion into the rear side of the access module;
Figures 2A and 2B are diagrams showing the electrical contacts relative to a telephone wire pair in the currently known termination strips without access module and with the access module inserted therein, respectively;
Figures 3A and 3B similar the preceding figs. 2A and 2B, respectively, show the electrical contacts of the termination strips according to the invention;

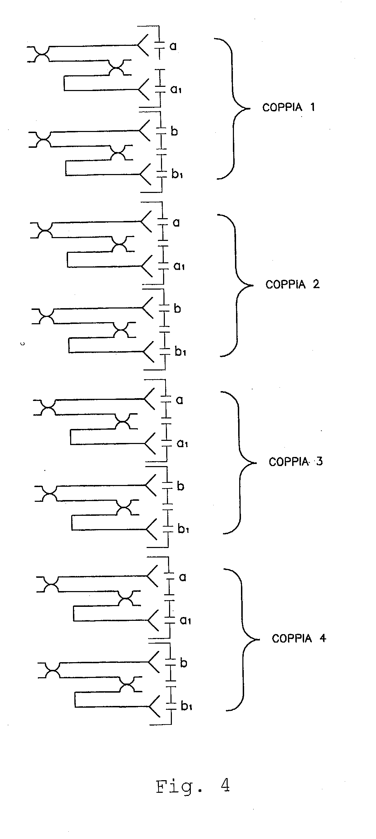

Figure 4 shows the electrical contacts of the first four telephone wire pairs of a termination strip according to the present invention.

As known, a termination strip includes several elementary strips above one another, each of them consisting of a body of plastics and a plurality of metal members embodied in such body of plastics. Such metal members are as many as the wires a) and b) of telephone wire pairs 1, 2, 3,... etc. connected to the strip.

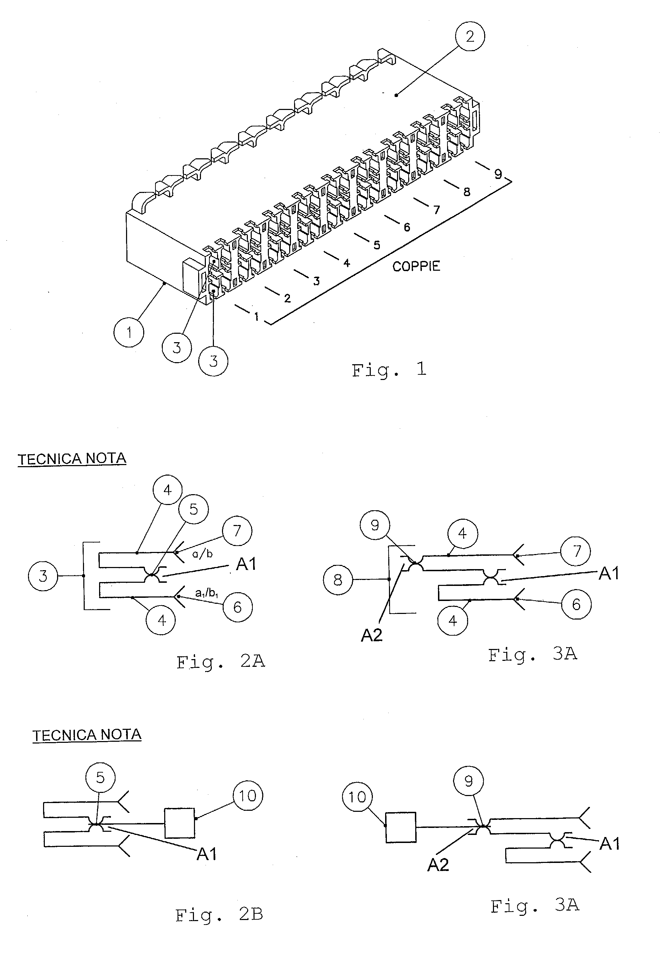

Each such metal member 3 consists currently of two elastic portions 4 having at least one mutual contact area 5 at the first access point A1 and two sockets 6 and 7 where wire a₁/b₁ of the pair at the cable and/or user side and wire a/b of the pair at exchange side are connected, respectively (fig. 2A, 2B).

According to the present invention, there is provided a new metal member 8 similar to the already known member 3 characterized in that a further mutual contact area 9 between such elastic portion is arranged which is similar to the already described first area 5 but dedicated to the insertion of access module 10, where provided. Such further contact area 9 is placed at an additional access point A2.

According to a peculiar feature of the invention, additional contact area 9 is arranged at the central side of the elastic portion 4 so that in case of a manual intervention of sectioning the first contact area 5 to check the cable, access module 10 is suspended at the central side and does riot affect the intervention of the operator because of any failure thereof.

In other words, referring particularly to figures 2B and 3B, in case of a metal member 3 of the known type access module 10 should be inserted into the first contact area 5 (access point A1), while in case of a new metal member 8 according to the invention access module 10 is inserted into the additional contact area 9 (access point A2).

At last, the preferred embodiment of the new termination strip according to the invention consists essentially of several elementary termination strips 1 comprising the following parts:
- body of plastics 2,
- new metal members 8,
- elastic portions 4,
- contact area 5,
- point of connection of wire a₁/b₁ at cable side 6,
- point of connection of wire a/b at exchange side 7,
- further contact area 9.

The present invention has been described and illustrated according to a preferred embodiment thereof, however, it should be understood that those skilled in the art can make technically and/or functionally equivalent modifications and/or replacements without departing from the scope of the present industrial invention.

## Claims

1. A termination strip for telephone metal cables, **characterized in that** it includes at least one elementary strip (1) provided with a further access point (A2) to the telephone wire pairs in addition to a first contact point (A1) already existing in the current strips.

2. The termination strip according to claim 1, **characterized in that** said additional access point (A2) is arranged for the insertion of an access module (10) of the known type.

3. The termination strip according to the preceding claim, **characterized in that** it has outside shape and size fully corresponding to those of the termination strips of the known type.

4. The termination strip according to any preceding claim, **characterized in that** said additional access point (A2) is arranged at the rear side so that a known access module (10) can be inserted both into the rear side and the front side where the first access point (A1) usually existing in the known strips is located.

5. The termination strip according to any preceding claim, **characterized in that** it consists essentially of one or more elementary termination strips (1) comprising the following parts: a body of plastics (2), new metal members (8), elastic portions (4), a first contact area (5), a point of connection of wire a₁/b₁ at cable or user side (6), a point of connection of wire a/b at exchange side (7), a further contact area (9).

6. The termination strip according to claims 2 to 5, **characterized in that** the additional access point (A2) is arranged at one of the two elastic portions (4), and namely that connecting wire a/b at the exchange side (6), so that in case of a manual intervention of sectioning the first contact area (5) to check the cable, access module (10) is suspended at the central side and does not affect the intervention of the operator because of any failure thereof.

7. The termination strip according to any preceding claim, **characterized in that** the additional access point (A2) is arranged such that the operation of the elementary termination strip (1) is the same both with and without access module (10) inserted.
